# EUROPÄISCHE PATENTSCHRIFT

(11) **EP 1 710 150 B1**
(45) Veröffentlichungstag und Bekanntmachung des Hinweises auf die Patenterteilung: **19.01.2011**
(21) Anmeldenummer: 06007003.4
(22) Anmeldetag: 31.03.2006
(51) Int. Cl.: B62D 21/02, B62D 21/15

(54) **Fahrzeugstruktur mit einem Verstärkungsrahmen**
Vehicle structure with a reinforcing frame
Structure de véhicule avec une structure de renforcement

(30) Priorität: 05.04.2005 DE 102005015439
(43) Veröffentlichungstag der Anmeldung: 11.10.2006
(73) Patentinhaber: Wilhelm Karmann GmbH, 49084 Osnabrück (DE)
(72) Erfinder: Bunsmann, Winfried, 49143 Bissendorf (DE); Brockhoff, Franz-Ulrich, 49565 Bramsche (DE)
(74) Vertreter: Kronthaler, Schmidt & Coll.

(56) Entgegenhaltungen:
- EP-A- 1 593 586
- EP-A2- 0 897 853
- DE-A1- 19 811 215
- DE-A1- 19 943 296
- GB-A- 374 756

## Beschreibung

Die Erfindung betrifft einen Verstärkungsrahmen für eine Fahrzeugstruktur mit einem Boden und Längsholmen an jeder Seite des Bodens sowie eine Fahrzeugstruktur mit einem solchen Verstärkungsrahmen.

Insbesondere bei viersitzigen Cabriolet Fahrzeugen ist die Seitencrashfestigkeit ein Problem, da die hinteren Türpfosten bzw. die Pfosten B nur schwer in Querrichtung des Fahrzeugs, wo sich im Allgemeinen der Fahrersitz und der Beifahrersitz zwischen den Pfosten befinden, mit ausreichender Stabilität herstellbar sind, so dass es bei dem Seitencrash zu Eindrückungen in die Karosserie kommen kann, die für die Insassen gefährlich sind.

Aus der DE 101 13 647 A1 ist eine Fahrzeugstruktur bekannt, bei der zur Erhöhung der Steifigkeit der Struktur zwischen einem Mitteltunnel des Bodens und einer die Karosseriepfosten aufweisenden Trägerstruktur ein Stützträger vorgesehen ist, der in Fahrtrichtung ansteigt und mit dem Mitteltunnel sowie der Trägerstruktur einen Rahmenverbund bildet. Der Stützträger versteift insbesondere die Pfosten A, an denen die Fahrertür und die Beifahrertür angeschlagen sind.

Aus der DE 199 45 590 A1 ist eine Fahrzeugkarosserie bekannt, die einen Crashträger aufweist, der in Höhe der Sitzfläche einer Rücksitzbank angeordnet ist und sich im Bereich der vorderen Oberkante des Rücksitzes befindet.

Die EP 1 593 586 A2, die ein Art. 54(3) EPÜ-Dokument ist, offenbart einen Verstärkungsrahmen für eine Fahrzeugstruktur mit einem Boden und Längsholmen an jeder Seite des Bodens, an welchem Boden ein Fahrersitz und seitlich davon ein Beifahrersitz befestigbar sind, welcher Verstärkungsrahmen im Bereich des hinteren Endes einer an der Fahrzeugstruktur montierbaren Fahrer- und Beifahrertüre anbringbar ist und einen unteren Querträger und einen oberen Querträger aufweist, deren seitliche Enden mittels in Hochrichtung des Fahrzeugs verlaufender, mit den Längsholmen verbindbarer Seitenträger verbunden sind.

Der Erfindung liegt die Aufgabe zugrunde, insbesondere die Fahrzeugstruktur von viersitzigen Cabrioletfahrzeugen für eine erhöhte Seitencrashsicherheit zu versteifen.

Diese Aufgabe wird mit einem Verstärkungsrahmen gemäß dem Anspruch 1 gelöst.

Der erfindungsgemäße Verstärkungsrahmen kann beispielsweise zwischen im Bereich der Gürtellinie endenden Pfosten B der Fahrzeugstruktur angeordnet werden, so dass er die Bewegungsfreiheit der auf Hintersitzen sitzenden Personen und die sonstige Nutzbarkeit des Fahrzeugs kaum oder gar nicht beeinträchtigt.

Die Unteransprüche 2 bis 6 sind auf vorteilhafte Ausführungsformen des erfindungsgemäßen Verstärkungsrahmens gerichtet, deren Vorteile aus der nachfolgenden detaillierten Beschreibung eines Ausführungsbeispiels klar werden.

Der Anspruch 7 ist auf eine Fahrzeugstruktur gerichtet, die einen erfindungsgemäßen Verstärkungsrahmen enthält.

Mit den Merkmalen des Anspruchs 8 wird die erfindungsgemäße Fahrzeugstruktur in vorteilhafter Weise weitergebildet.

Der Erfindung wird im folgenden anhand schematischer Zeichnungen beispielsweise und mit weiteren Einzelheiten erläutert.

In den Figuren stellen dar:
- Fig. 1: eine schematische Perspektivansicht eines viersitzi- gen Cabriolet Fahrzeugs ohne Türen und bei voll ge- öffnetem und versenktem Verdeck.
- Fig. 2: eine schematische Querschnittsansicht durch das Fahrzeug gemäß Figur 1, geschnitten in einer den er- findungsgemäßen Verstärkungsrahmen enthaltenden Ebe- ne.

- Fig. 3: eine Ansicht ähnlich der Figur 2 des Verstärkungsrah- mens,
- Fig. 4: eine perspektivische Ansicht des Verstärkungsrahmens.

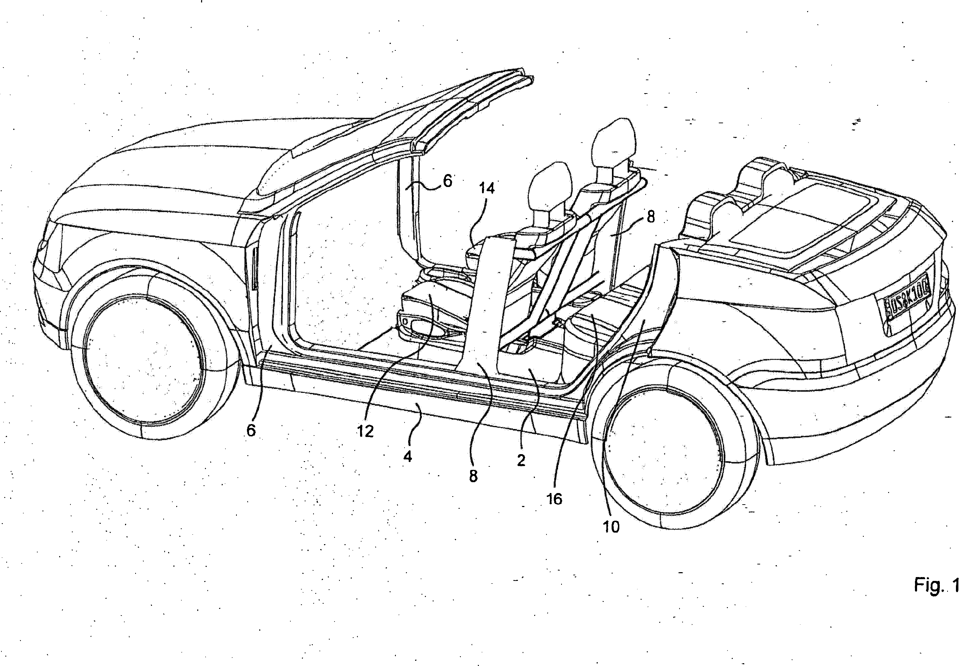

Gemäß Figur 1 weist ein Cabrioletfahrzeug eine Fahrzeugstruktur mit einem Boden 2, seitlichen Längsholmen 4 (nur der Lin-ke ist sichtbar) bzw. Schwellern, A-Pfosteh 6, an denen nicht dargestellte Vordertüren angeschlagen sind, und die oben in den Windschutzscheibenrahmen übergehen, B-Pfosten 8, an denen die Schlösser für die Vordertüren angebracht sind, und die nicht dargestellten hinteren Türen angeschlagen sind, und C-Pfosten 10 auf, die im Allgemeinen an ihren oberen Enden über eine stabile Querstruktur abgestützt sind.

Das in Figur 1 nicht dargestellte Dach kann als Faltverdeck oder als Klappverdeck aus in sich steifen Teilen ausgebildet sein.

An dem Boden 2 sind in an sich bekannter Weise Sitzschienen angeordnet, auf denen ein Fahrersitz 12 und ein Beifahrersitz 14 längs verschieblich angeordnet sind.

Eine Rücksitzbank 16 (oder zwei hintere Einzelsitze) ist im hinteren Bereich des Fahrzeugs teilweise zwischen den C-Pfosten 10 angeordnet.

Wie aus Figur 1 ersichtlich, enden die B-Pfosten 8, die im dargestellten Beispiel an ihrem unteren Bereich großflächig mit den Längsholmen 4 bzw. Schwellern verbunden sind, oben im Bereich der Gürtellinie des Fahrzeugs.

Erfindungsgemäß ist zwischen den B-Pfosten 8 ein insgesamt mit 20 bezeichneter Verstärkungsrahmen angeordnet, der die beiden B-Pfosten 8 in Querrichtung des Fahrzeugs gegenseitig abstützt.

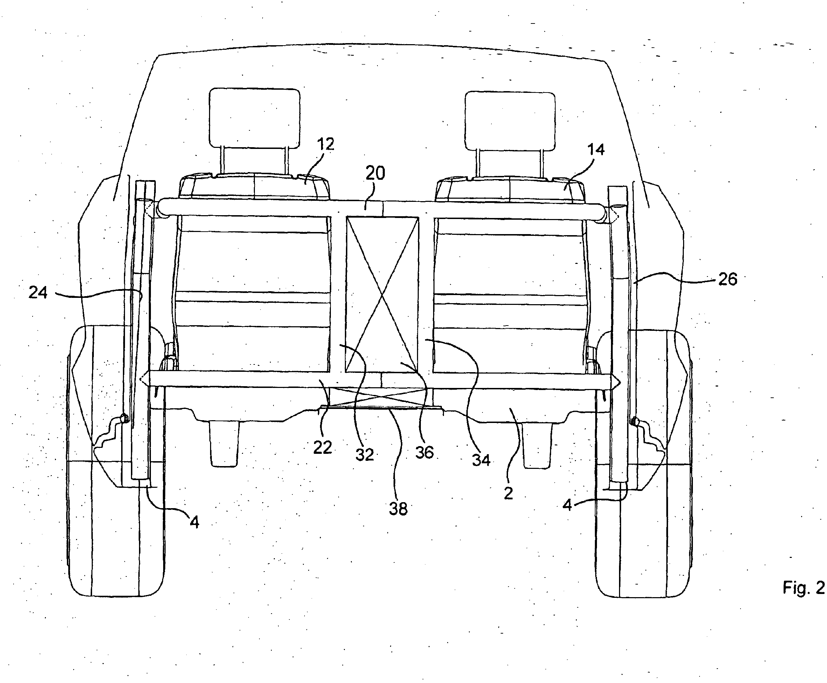

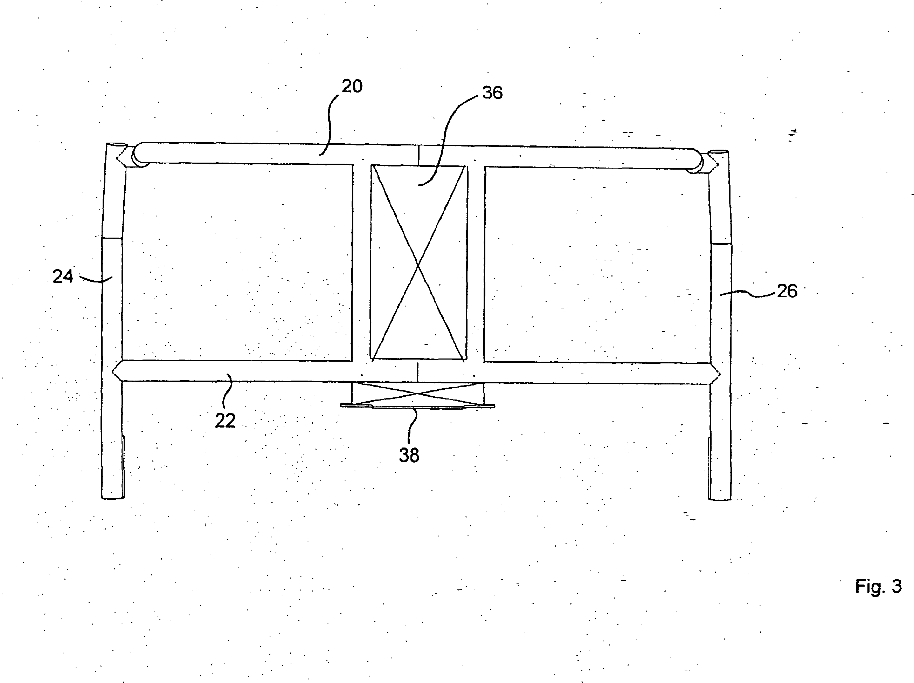

Im Folgenden wird der Verstärkungsrahmen 18 anhand der Figuren 2 bis 4 genauer beschrieben.

Der Verstärkungsrahmen 18 weist einen oberen Querträger 20 und einen unteren Querträger 22 auf, die sich in Querrichtung des Fahrzeugs zwischen den B-Pfosten 8 erstrecken.

Der obere Querträger 20 verläuft vorteilhafterweise etwas unterhalb der Oberränder der Lehnen des Beifahrersitzes 12 und des Beifahrersitzes 14.

Der untere Querträger 22 verläuft in einer Höhe im Bereich der Sitzkissen derart, dass der unter dem Fahrersitz bzw. Beifahrersitz vorhandene Fußraum für die Fahrpassagiere nicht eingeschränkt ist.

Die Seitenenden des oberen Querträgers und des unteren Querträgers sind mit vorzugsweise in die B-Pfosten 8 integrierten, in Hochrichtung des Fahrzeugs verlaufenden Seitenträgern 24 und 26 verbunden, die tief in die Längsholme 4 hinabreichen und stabil mit diesen verbunden bzw. in diese eingeschuht sind.

Die Seitenträger 24 sind vorzugsweise als Hohlprofile derart ausgebildet, dass sie eine hohe Biegefestigkeit gegen im Bereich zwischen dem oberen Querträger 20 und dem unteren Querträger 22 auf sie von außen einwirkenden Kräften haben.

Die Querträger 20 und 22 sind vorteilhafterweise derart ausgebildet, dass sie eine hohe Festigkeit insbesondere gegenüber von den Seitenträgern her auf sie wirkenden Kräften haben.

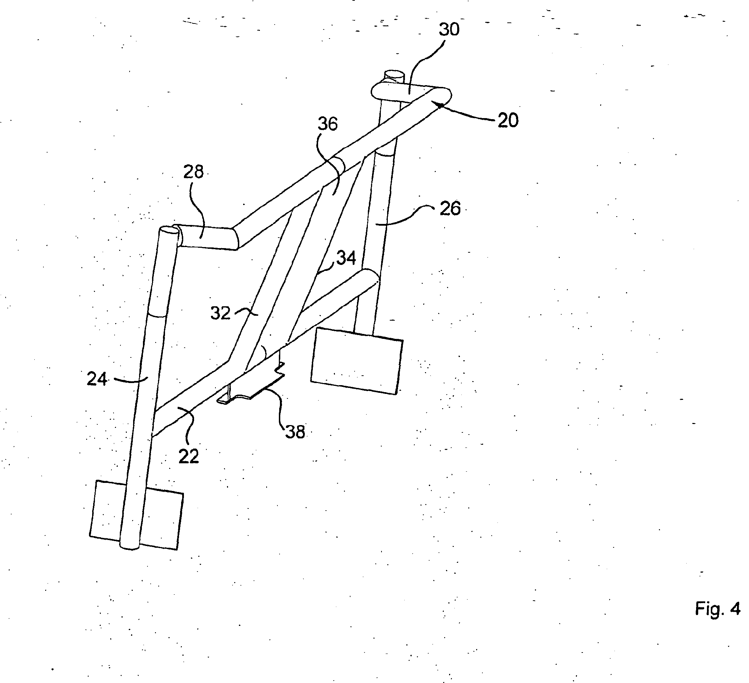

Wie insbesondere aus den Figuren 1 und 4 ersichtlich, ist der obere Querträger 20 über abgekröpfte Bereiche 28 bzw. 30 mit den Seitenträgern 24 bzw. 26 verbunden, wobei die abgekröpften Bereiche von den Seitenträgern 24 bzw. 26 aus zunächst, bezogen auf das Fahrzeug, nach hinten verlaufen und dann zu dem im Wesentlichen in Fahrzeugquerrichtung verlaufenden oberen Querträger,20 abgebogen sind. Es versteht sich, dass der Querträger 20 insgesamt einteilig ausgebildet sein kann und zu den gekröpften Bereichen 28 bzw. 30 unmittelbar umgebogen bzw. umgeformt ist. Die Form des oberen Querträgers 20 ist vorteilhafterweise an die Form der ganz nach hinten verschobenen Sitze (Fig. 1) angepasst und wird von den obersten Bereichen der Sitze überlappt, in denen Kopfstützen angeordnet sind.

Zur weiteren Stabilitätserhöhung des Verstärkungsrahmens sind die mittleren Bereiche des oberen Querträgers 20 und des unteren Querträgers 22 über zwei in Querrichtung des Fahrzeugs beabstandete Stützträger 32 und 34 verbunden, wobei der von den Stützträgern und den Querträgern umschlossene Bereich vorteilhafterweise durch ein Schubfeld 36, beispielsweise ein Blech, zumindest teilweise gefüllt ist, so dass der gesamte Verstärkungsrahmen außerordentlich verwindungssteif ist.

Wie insbesondere aus der Figuren 1 und 2 ersichtlich, sind die Stützträger 32 und 34 derart angeordnet, dass der Knieraum für die hinteren Fahrzeuginsassen nicht eingeschränkt ist.

Der untere Querträger 22 ist in seinem mittleren Bereich mit dem Fahrzeugboden 2 in einem Verbindungsbereich 38 verbunden. Diese Verbindung kann dadurch erfolgen, dass der untere Querträger 22 direkt mit einem erhöhten Bereich des Bodens (z. B. einem Mitteltunnel) verbunden ist oder mit einem Zwischenblech oder -profil versehen ist, über das die Verbindung erfolgt.

Der gesamte Verstärkungsrahmen kann als ein komplett vorgefertigtes, in sich hochstabiles Bauteil nachträglich an einer Fahrzeugstruktur befestigt werden, beispielsweise durch Verschrauben oder Verschweißen. Alternativ können die Seitenträger zusammen mit den Pfosten B hergestellt und in die Fahrzeugstruktur integriert werden. Weiter ist es möglich, die Pfosten B an der Fahrzeugstruktur entfallen zu lassen und bezüglich der Fahrzeugstruktur durch die Seitenträger 24 und 26 zu ersetzen, die tief in die Längsholme 4 eingesetzt sind.

Der erfindungsgemäße Verstärkungsrahmen kann zusätzlich genutzt werden, indem an ihm Ablageteile oder Funktionsteile, wie beispielsweise Airbags für die Fahrzeugpassagiere, angebracht werden.

Der erfindungsgemäße Verstärkungsrahmen kann nicht nur für ein beispielhaft beschriebenes viersitziges Cabriolet Fahrzeug verwendet werden, sondern auch für zweisitzige Fahrzeuge, die hinter den Fahrersitzen noch einen Gepäckraum haben, usw.

Es versteht sich, dass der erfindungsgemäße Verstärkungsrahmen auch für viertürige bzw. viersitzige Cabriolet Fahrzeuge vorteilhaft einsetzbar ist, bei denen die Pfosten B über einen Überrollbügel miteinander verbunden sind

### BEZUGSZEICHENLISTE

- 2: Boden
- 4: Längsholme
- 6: Pfosten A
- 8: Pfosten B
- 10: Pfosten C
- 12: Fahrersitz
- 14: Beifahrersitz
- 16: Rücksitzbank
- 18: Verstärkungsrahmen
- 20: oberer Querträger
- 22: unterer Querträger
- 24: Seitenträger
- 26: Seitenträger
- 28: abgekröpfter Bereich
- 30: abgekröpfter Bereich
- 32: Stützträger
- 34: Stützträger
- 36: Schubfeld
- 38: Verbindungsbereich

## Patentansprüche

1. Fahrzeugstruktur mit einem Verstärkungsrahmen die einen Boden (2) und Längsholmen (4) an jeder Seite des Bodens aufweist, an welchem Boden ein Fahrersitz (12) und seitlich davon ein Beifahrersitz (14) befestigbar sind, welcher Verstärkungsrahmen im Bereich des hinteren Endes einer an der Fahrzeugstruktur montierbaren Fahrer- und Beifahrertüre anbringbar ist und einen unteren Querträger (22) und einen oberen Querträger (20) aufweist, deren seitliche Enden mittels in Hochrichtung des Fahrzeugs verlaufender, mit den Längsholmen verbindbarer Seitenträger (24, 26) verbunden sind, wobei die Querträger (20, 22) in ihrem mittleren Bereich mittels zweier in Hochrichtung des Fahrzeugs verlaufender, in Querrichtung des Fahrzeugs beabstandeter Stützträger (32, 34) verbunden sind und die von den Stützträgern (32, 34) und Bereichen der Querträger (20, 22) umschlossene Fläche durch ein Schubfeld (36) zumindest teilweise gefüllt ist.

2. Fahrzeugstruktur nach Anspruch 1,
**dadurch gekennzeichnet,**
**dass** der obere Querträger (20) über in Rückwärtsrichtung des Fahrzeugs abgekröpfte Bereiche (28, 30) mit den Seitenträgern (24, 26) verbunden ist.

3. Fahrzeugstruktur nach Anspruch 1 oder 2,
**dadurch gekennzeichnet,**
**dass** die Seitenträger (24, 26) in seitliche Pfosten (8) der Fahrzeugstruktur integriert sind.

4. Fahrzeugstruktur nach den Ansprüchen 1 bis 3,
**dadurch gekennzeichnet,**
**dass** der obere Querträger (20) in einer Höhe derart angeordnet ist, dass er im Bereich der Oberränder der vor ihm an dem Boden (2) befestigten Fahrzeugsitze (12, 14) verläuft.

5. Fahrzeugstruktur nach Anspruch 4,
**dadurch gekennzeichnet,**
**dass** die Form des oberen Querträgers (20) in Aufsicht auf das Fahrzeug der Kontur der Rückseiten der Sitzlehnen angepasst ist.

6. Fahrzeugstruktur nach den Ansprüchen 1 bis 5,
**dadurch gekennzeichnet,**
**dass** der Abstand zwischen dem Boden (2) und dem unteren Querträger (22) derart ist, dass Füße einer auf einem Sitz (16) hinter dem Verstärkungsrahmen sitzenden Person hindurchpassen.

7. Fahrzeugstruktur nach einem der Ansprüche 1 bis 6,
**dadurch gekennzeichnet,**
**dass** die Fahrzeugstruktur für ein offenes, viersitziges Fahrzeug ist, dessen B-Säulen (8) im Bereich der Gürtellinie enden.

8. Fahrzeugstruktur nach Anspruch 7,
**dadurch gekennzeichnet,**
**dass** die B-Säulen (8) durch die Seitenträger (24, 26) gebildet sind.

## Claims

1. A vehicle structure having a reinforcing frame which structure comprises a floor (2) and longitudinal bars (4) at each side of the floor, a driver seat (12) and a front passenger seat (14) being laterally attachable thereto, which reinforcing frame is attachable in the portion of a rear end of a driver door and a front passenger door mountable to the vehicle structure and comprises a lower crossbeam (22) and an upper crossbeam (20), the lateral ends thereof being connected by means of lateral beams (24, 26) extending in an upward direction of the vehicle and being connectable to the longitudinal bars, wherein the crossbeams (20, 22) are connected in the middle portion thereof by means of two support beams (32, 34) extending in the upward direction of the vehicle and being spaced part in the transverse direction of the vehicle, and the area enclosed by the support beams (32, 34) and portions of the crossbeams (20, 24) is at least partly filled by a shear field (36).

2. The vehicle structure according to claim 1, **characterised in that**
the upper crossbeam (20) is connected to the lateral beams (24, 26) by means of portions (28, 30) being offset in the rearward direction of the vehicle.

3. The vehicle structure according to claim 1 or 2, **characterised in that**
the lateral beams (24, 26) are integrated in lateral pillars (8) of the vehicle structure.

4. The vehicle structure according to claims 1 to 3, **characterised in that**
the upper crossbeam (20) is disposed in a height such that it extends in the portion of the upper boundary of the vehicle seats (12, 14) being attached to the floor (2) in front thereof.

5. The vehicle structure according to claim 4, **characterised in that**
the form of the upper crossbeam (20) is adapted to the form of the rear sides of the back rests in a plan view of the vehicle.

6. The vehicle structure according to claims 1 to 5, **characterised in that**
the distance between the floor (2) and the lower crossbeam (22) is such that the feet of a passenger seating on a seat (16) behind the reinforcing frame pass through.

7. The vehicle structure according to claims 1 to 6, **characterised in that**
the vehicle structure is for an open vehicle having four seats, the B-pillars (8) thereof ending in a portion of the equator.

8. The vehicle structure according to claim 7, **characterised in that**
the B- pillars (8) are formed by the lateral beams (24, 26).

## Revendications

1. Structure de véhicule avec un cadre de renforcement, qui présente un fond (2) et des longerons (4) sur chaque côté du fond, sur lequel fond peuvent être fixés un siège conducteur (12) et, latéralement par rapport à celui-ci, un siège passager (14), lequel cadre de renforcement peut être installé dans la zone de l'extrémité arrière d'une porte de conducteur et d'une porte de passager montables sur la structure de véhicule et qui présente une traverse inférieure (22) et une traverse supérieure (20), dont les extrémités latérales sont raccordées au moyen de supports latéraux (24, 26) s'étendant dans le sens de la hauteur du véhicule et pouvant se raccorder aux longerons, dans laquelle les supports latéraux (20, 22) sont raccordés dans leur zone centrale au moyen de deux supports d'appui (32, 34) s'étendant dans le sens de la hauteur du véhicule et espacés dans la direction transversale du véhicule, la surface entourée par les supports d'appui (32, 34) et les zones des traverses (20, 22) étant remplie au moins en partie par un panneau de poussée (36).

2. Structure de véhicule selon la revendication 1, **caractérisée en ce que** la traverse supérieure (20) est raccordée aux supports latéraux (24, 26) via des zones (28, 30) coudées vers l'arrière du véhicule.

3. Structure de véhicule selon la revendication 1 ou 2, **caractérisée en ce que** les supports latéraux (24, 26) sont intégrés aux montants latéraux (8) de la structure de véhicule.

4. Structure de véhicule selon les revendications 1 à 3, **caractérisée en ce que** l'on aménage la traverse supérieure (20) à une hauteur telle qu'elle s'étende dans la zone des bords supérieurs des sièges de véhicule (12, 14) fixés devant elle sur le fond (2).

5. Structure de véhicule selon la revendication 4, **caractérisée en ce que** la forme de la traverse supérieure (20) est adaptée, en vue de dessus du véhicule, au contour des faces arrière des dossiers de sièges.

6. Structure de véhicule selon les revendications 1 à 5, **caractérisée en ce que** la distance entre le fond (2) et la traverse inférieure (22) est telle que les pieds d'une personne assise sur un siège (16) derrière le cadre de renforcement passent à travers celui-ci.

7. Structure de véhicule selon l'une quelconque des revendications 1 à 6, **caractérisée en ce que** la structure de véhicule est destinée à un véhicule ouvert à quatre sièges, dont les montants B (8) se terminent dans la zone de la ligne de ceinture.

8. Structure de véhicule selon la revendication 7, **caractérisée en ce que** les montants B (8) sont formés par les supports latéraux (24, 26).
